# EUROPEAN PATENT APPLICATION

(11) **EP 4 610 486 A1**
(43) Date of publication of application: **03.09.2025**
(21) Application number: 24160132.7
(22) Date of filing: 28.02.2024
(51) Int. Cl.: F03D 7/02

(54) **YAW DRIVE MONITORING METHOD**

(71) Applicant: Siemens Gamesa Renewable Energy A/S, 7330 Brande (DK)
(72) Inventor: Brun, Soeren Trabjerg, 7300 Jelling (DK); Andersen, Kasper Imer, 8600 Silkeborg (DK)
(74) Representative: SGRE-Association

(57) **Abstract**

The invention describes a method of monitoring a wind turbine yaw system (2) comprising a plurality of yaw drives (D1, ..., D8), which method comprises, for each yaw drive (D1): receiving encoder data (Eout) from a motor speed encoder (E) of that yaw drive (D1); computing a signal mean (10M) on the basis of the received encoder data (Eout); computing a collective signal mean (10Mcoll) from the signal means (10M) of the other yaw drives (D2, ..., D8); comparing the signal mean (10M) to the collective signal mean (10Mcoll); and flagging that yaw drive (D1) as potentially faulty if the corresponding comparison result (10Δ) exceeds a predefined threshold (10T). The invention further describes a monitoring arrangement (1) for a wind turbine yaw system (20); and a wind turbine (2) comprising such a monitoring arrangement (1) .

## Description

### Background

In order to keep the hub of a wind turbine facing into the wind, the entire nacelle is yawed about the top of the wind turbine tower. In a widely used configuration, a ring gear (or "gear rim") is installed at the top of the tower, and an arrangement of pinions, usually mounted to the nacelle bedplate, is controlled to effect a rotation of the nacelle relative to the stationary tower. Usually, the yaw system implements multiple essentially identical yaw drives, for example two groups of four yaw drives, with one group on each side of the nacelle bedplate. A yaw drive usually comprises an electric motor, a gearbox to convert the high motor speed to a lower speed, and a pinion with teeth to engage with the ring gear. A yaw drive can be equipped with a motor speed encoder (usually an incremental encoder or similar), configured to report motor shaft position data, for example using two output channels in quadrature, each output channel reporting a fixed number of pulses in each complete rotation of the motor shaft. Encoder data from a yaw drive can be reported to the wind turbine controller. From the pulse frequency of an encoder, the wind turbine controller can then determine the rotational speed of the corresponding yaw drive motor, for example during a yawing action.

The input-to-output ratio of a yaw drive gearbox can be very high in order to produce the required turning moment. The large forces acting on the gearbox can result in damage from wear and tear. In a worst-case scenario, a sun gear of a planetary gearbox stage may break, thereby disconnecting the pinion from the motor drive shaft. In the case of such a fault, the yaw drive motor may continue to operate normally, and the encoder continues to report an apparently normal (but slightly higher) motor speed. However, the turning moment for the gear rim must be provided by the other yaw drives. Generally, a fault of this nature in the gearbox will only be detected during an annual service of the wind turbine. However, if a yaw drive gearbox fails shortly after an inspection, the remaining yaw drives must share the load until the next annual inspection. Wear and tear on these yaw drives is therefore higher than usual and can lead to an increased fault rate.

It is therefore an object of the invention to provide an improved way of detecting a fault in a yaw drive gearbox.

This object is achieved by the claimed method of monitoring the yaw drives of a wind turbine yaw system; and by the claimed yaw drive monitoring arrangement.

### Description

In the context of the invention, a wind turbine yaw system shall be understood to comprise a gear rim (mounted at the upper level of the wind turbine's tower) and a plurality of yaw drives, each yaw drive comprising an electric motor, a gearbox, and a pinion. The gear rim has teeth about a vertical face, which can be the outside face or the inside face of the gear rim. The yaw drives can be arranged equidistantly about the gear rim, in distinct groups, or in any suitable configuration, and are positioned so that the pinions engage with the gear rim. Collectively, the yaw drives deliver enough turning moment to turn the nacelle about the tower axis. The direction of rotation of the motors determines the direction in which the nacelle is turned. Generally, the wind turbine controller initiates a yawing action by sending appropriate signals to the yaw drive motors, so that these are actuated to collectively turn the nacelle in the desired direction. Each yaw drive shall be understood to comprise a motor speed encoder, arranged for example in a bearing between motor and gearbox. A speed encoder generates digital output data which is sampled at a certain sampling rate.

According to the invention, the method of monitoring a wind turbine yaw system with a plurality of yaw drives comprises, for each individual yaw drive, receiving encoder data from a motor speed encoder of that yaw drive; and computing an arithmetic mean or "signal mean" on the basis of the received encoder data. The "signal mean" shall be understood as a single value that is representative of the encoder data over that yawing action. A collective signal mean is also computed from the signal means of the other yaw drives. The signal mean of an individual yaw drive is compared to the corresponding collective signal mean, and that yaw drive is flagged as "potentially faulty" if the comparison result exceeds a predefined threshold.

The invention is based on the insight that the task of turning the nacelle is shared more or less equally between the yaw drives, so that, in a fault-free yaw system with all "healthy" yaw drives, the results of the individual comparisons should be very similar. As the inventors have noticed, if a yaw drive gearbox is damaged to the extent that the motor drive shaft is no longer connected to the pinion, the data reported by the encoder of that yaw drive will differ from the encoder data reported by the "working" yaw drives. Therefore, any comparison (between the arithmetic signal mean of a specific yaw drive and the collective arithmetic signal mean representing the other yaw drives) that differs noticeably from an expected result is interpreted by the inventive method as a potential fault in the gearbox of the corresponding yaw drive.

An advantage of the invention is that it uses readily available information in a novel manner. It is well-known to equip an electric motor with a speed sensor (usually an incremental encoder or similar), positioned to measure the rotational speed of the yaw motor. When deployed in the yaw drives of a yaw system, such encoders report motor shaft position data to the wind turbine controller, which can evaluate the data to determine the motor speeds of the yaw drives during a yaw brake test procedure, for example.

According to the invention, the monitoring arrangement for a wind turbine yaw system comprises an essentially identical computation module for each yaw drive, and each computation module comprises: an input stage for receiving encoder data from a motor speed encoder of the corresponding yaw drive; a processing stage configured to compute a signal mean on the basis of the received encoder data; a processing stage configured to compute a collective signal mean from the signal means of the other yaw drives; a comparator stage configured to compare the signal mean to the collective signal mean; and an output stage configured to flag that yaw drive as potentially faulty if the corresponding comparison result exceeds a predefined threshold.

The monitoring arrangement can utilize encoders already present in the yaw drives of the yaw system, i.e. no additional hardware is required if each yaw drive is already equipped with a motor speed encoders. The computation stages of the inventive monitoring arrangement can be provided as a computer program that is directly loadable into a memory of the wind turbine controller, with program elements for performing steps of the inventive method when the computer program is executed by the wind turbine controller. The inventive monitoring arrangement can therefore be realised at a favourably low cost, since it can be sufficient to update the wind turbine controller with the relevant software elements in order to carry out the invention.

According to the invention, a wind turbine comprises a yaw system comprising a gear rim and a plurality of yaw drives, wherein each yaw drive comprises an electric motor, a gearbox, and a pinion arranged to engage with the gear rim; and an instance of the inventive monitoring arrangement.

Particularly advantageous embodiments and features of the invention are given by the dependent claims, as revealed in the following description. Features of different claim categories may be combined as appropriate to give further embodiments not described herein.

Any suitable motor speed encoder can be implemented in a yaw drive. In the following, without restricting the invention in any way, it may be assumed that a motor speed encoder is an incremental rotary encoder or shaft encoder as indicated above, configured to report position information using two output channels in quadrature. Each output channel "reports" a string of pulses (transitions between 0 and 1), with a known number of pulses per revolution. The number of pulses per revolution is the encoder resolution. As will be known to the skilled person, pulse counting or pulse timing techniques can be implemented to determine the pulse frequency, from which the rotational speed of the encoder (and therefore also the yaw drive motor) could be deduced. The encoder's direction of rotation is deduced from the leading channel.

As will become clear in the following, knowledge of the actual motor speed (rpm and rotation direction) is not required by the inventive method, and a potential fault in a yaw drive gearbox can be deduced instead by comparing other quantities derived from the encoder data.

In one approach, the encoder data can be processed using DSP techniques such as frequency-domain analysis, spectrum analysis, etc. For example, the encoder data of each yaw drive can be processed to convert the time-domain samples to a frequency-domain representation; the coefficients obtained in this manner for each yaw drive encoder can be averaged or otherwise processed to obtain signal mean quantities than can be compared to each other in order to detect a potentially faulty yaw drive. However, such techniques can involve significant computational effort. In a particularly preferred embodiment of the invention, the encoder data is processed to obtain a pulse frequency signal which subsequently undergoes zero-mean normalization, i.e. to obtain a signal that oscillates about zero. A suitable arithmetic mean of the zero-mean normalized signal is then calculated. In a particularly preferred embodiment of the invention, this step of obtaining the signal mean comprises computing the root-mean-square (rms) of the zero-mean normalized signal.

For each sampling instant, the value of a pulse frequency signal, a zero-mean normalized signal, a signal mean etc. shall be understood to be a digital value. A sequence of such digital values is referred to herein as a "curve" or "signal". The computational steps of processing encoder data to obtain the signal mean s are carried out over a suitable interval, for example over a complete yawing action, a portion of a yawing action, or over a predefined minimum time interval. A yawing action can be initiated whenever the wind turbine controller determines a yaw error, i.e. the hub is not facing directly into the wind. To reduce the yaw error to an acceptable level, the yaw drives are actuated to turn the nacelle so that the hub again faces into the wind. In a particularly preferred embodiment of the invention, a pulse frequency signal is zero-mean normalized by computing the root-mean-square (RMS) of the pulse frequency signal and subtracting the RMS signal from the pulse frequency signal. A zero-mean normalized signal is obtained from encoder data of each yaw drive, so that in an exemplary configuration with eight yaw drives, the monitoring arrangement computes eight such zero-mean normalized signals, and each collective mean can be obtained simply by summing seven of the zero-mean normalized signals and dividing by seven.

The rate at which yawing actions is performed can depend on various factors. Any change in wind direction can require a corrective yawing action. The wind direction may change frequently, depending on the weather conditions. During a yawing action, the pulse frequency signal of an encoder commences as an upward ramp, followed by a section in which the pulse frequency exhibits essentially oscillatory behaviour about a higher level. To obtain the zero-mean normalized signal for a yaw drive, encoder data relating to the initial ramp is preferably discarded, and signalprocessing is preferably performed over a portion of the subsequent oscillatory section.

In a particularly preferred embodiment of the invention, the monitoring arrangement maintains a fault matrix or fault table, in which it can record an accumulation of "potential fault" flags for each yaw drive. Such a table is initialized to empty (after commissioning, after an annual inspection, etc.) and then gradually filled by the monitoring arrangement as the encoder data is evaluated. In one exemplary embodiment, a fault matrix can be visualised as a two-dimensional table, with a "yawing action" column and a column for each yaw drive. In each row, a yawing action timestamp and/or running total can be updated, followed by a "0" entry for each healthy yaw drive and a "1" entry for each potentially faulty yaw drive. The table can comprise a fixed number of rows (e.g. fifteen, twenty, etc.), and can be maintained on a "first in, first out basis".

Alternatively or in addition, the monitoring arrangement may maintain a fault count for each yaw drive. The fault count can be incremented whenever that yaw drive is flagged as "potentially faulty". In a particularly preferred embodiment of the invention, the monitoring arrangement can be configured to cause the wind turbine controller to issue a fault report (e.g. to a wind park operator) when a yaw drive has been flagged as "potentially faulty" for a predefined number of yawing actions.

As indicated above, a rotary encoder delivers data that can be used to determine the rotational speed of a yaw drive motor, which may be of relevance during a yaw brake test. For the inventive method of identifying a gearbox fault, the actual motor speed is not in fact required: only the difference between an individual signal mean and an average signal mean is of interest. The data reported by a faulty rotary encoder might therefore be incorrectly interpreted as indicative of a faulty yaw drive gearbox. The inventive method therefore preferably also comprises a step of analysing the encoder output to establish the operational status of that encoder. In a particularly preferred embodiment of the invention, the inventive method comprises a step of counting the pulses received from an encoder. In the case of a functional encoder and a fault-free connection between encoder and controller, the pulse count will vary with the motor speed. Equally, a pulse count that remains at zero can be an indication that the encoder is not rotating, and a zero pulse count can therefore be interpreted to mean that the encoder is defective. The monitoring arrangement can cause the wind turbine controller to report this fault and schedule a replacement procedure, and excludes the corresponding yaw drive from the inventive monitoring method until the encoder is replaced.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 is a schematic of a commonly used wind turbine yaw system;
Figure 2 is a block diagram to illustrate the inventive monitoring arrangement;
Figure 3 shows exemplary signals for a series of yawing operations when carrying out the inventive method;
Figure 4 is a schematic representation of a yaw drive fault record as generated when carrying out the inventive method;
Figure 5 is a schematic representation of the inventive monitoring arrangement 1.

In the diagrams, like numbers refer to like objects throughout. Objects in the diagrams are not necessarily drawn to scale.

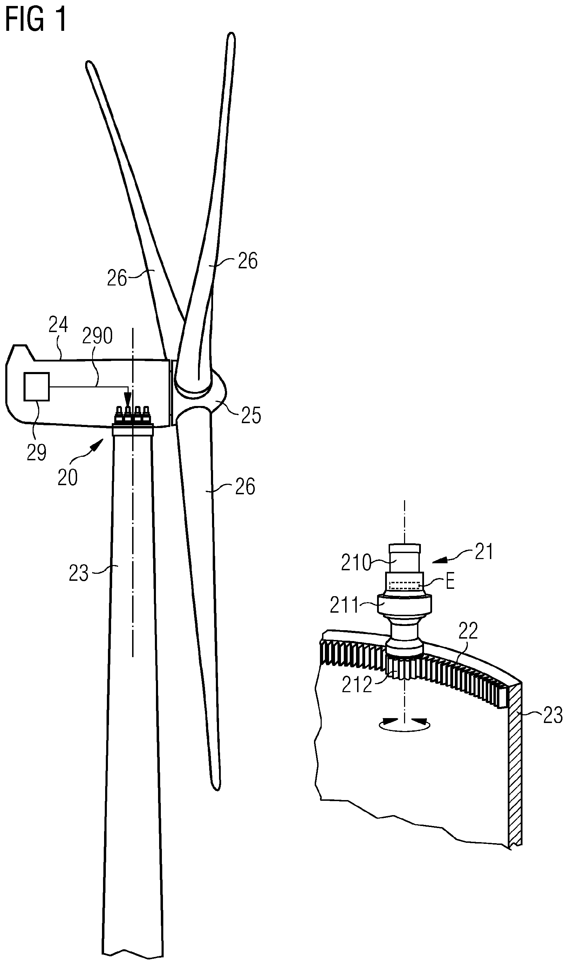

Figure 1 is a schematic of a commonly used wind turbine yaw system 20. The diagram shows a nacelle 24 mounted at the top of a tower 23, with an aerodynamic rotor 25, 26 that should always point into the wind in order to maximise power output and to minimize rotor blade loading. To this end, the wind turbine 2 is equipped with a yaw system 20 with several yaw drives, in this case eight yaw drives D1 - D8, arranged to turn the nacelle 24 about the vertical axis of the tower 23. Each yaw drive has a motor 210, a gearbox 211 (generally a planetary gearbox) and a pinion 212 as shown in the enlarged portion. The pinions 212 engage with the gear rim 22 at the top of the tower 23. The wind turbine controller 29 can initiate a yawing action, for example by issuing appropriate commands 290, causing the yaw drive motors 210 to collectively turn the nacelle 240 in the desired direction. Typically, a yawing action comprises turning the nacelle until the yaw error is reduced to an acceptable value. The hub alignment can be fixed by applying a yaw brake. It is important for the wind turbine controller 29 to establish that the yaw brake is functional. To this end, it is usual to arrange a rotary encoder E in a yaw drive D1 - D8 to report the motor shaft position. As will be familiar to the skilled person, a rotary encoder E can output pulse trains on two channels, and the motor speed and direction of rotation can be deduced by a suitable technique of pulse counting or pulse timing.

Ideally, the work of yawing the nacelle 24 is equally divided between the yaw drives D1 - D8. However, a gearbox 211 may fail for various reasons. In such a situation, the motor 210 of the faulty yaw drive D1 - D8 no longer turns the pinion 212, and the other yaw drives must do all the work until the defect is discovered. Usually, such a fault is only detected during a scheduled maintenance procedure, which may occur only infrequently, particularly in the case of an offshore wind turbine.

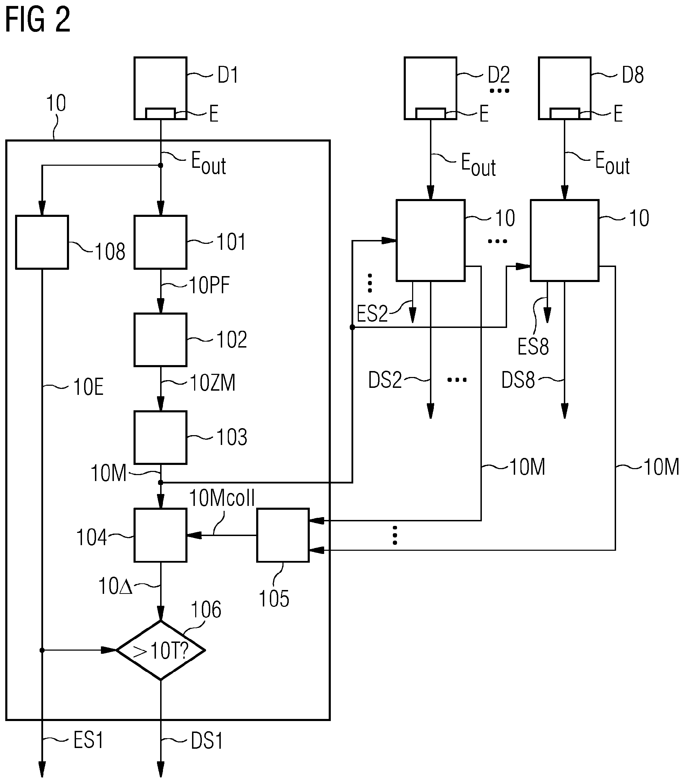

Figure 2 is a schematic block diagram to illustrate the inventive monitoring arrangement 1. The diagram shows a computation module 10 for processing data generated by the motor speed encoder of one of a plurality of yaw drives D1 - D8 of a wind turbine yaw system 2, and it shall be understood that an identical computation module 10 is provided for each yaw drive. Here, processing steps are illustrated for one yaw drive D1 of a set of eight yaw drives D1 - D8. During a yawing operation, the received encoder data Eout is processed in an input stage 101 to obtain a pulse frequency signal 10PF. In this exemplary embodiment, a zero-mean computation stage 102 computes a zero-mean normalized signal 10ZM from the pulse frequency signal 10PF, and a mean computation stage 103 computes the signal mean 10M, for example the root-mean-square 10M, of the zero-mean normalized signal 10ZM.

This computation module 10 also receives the signal mean values 10M from the computation modules 10 of the other seven yaw drives D2 - D8. These seven signal mean values 10M are averaged in block 104 to obtain the collective mean 10Mcoll for the rest of the yaw drives D2 - D8. The collective mean 10Mcoll and the local mean 10M are then compared in block 105. For example, the collective mean 10Mcoll can be divided by the local mean 10M and multiplied by 100 to obtain a percentage value 10Δ to quantify the degree to which the encoder output from this yaw drive differs from the encoder output of the other yaw drives. The result 10Δ is compared to a permitted threshold 10T in block 106. In a healthy yaw system, the local mean 10M can be expected to be quite similar to the collective mean 10Mcoll. However, if the yaw drive D1 is faulty, the local mean 10M will differ significantly from the collective mean 10Mcoll. A suitable threshold 10T (for example a percentage of the collective mean 10Mcoll) is applied by the comparator 106 to identify any such discrepancy. The gearbox of the yaw drive D1 can be flagged as "potentially faulty" whenever the local mean 10M differs from the collective mean 10Mcoll by more than the acceptable threshold 10T. For example, the gearbox status DS1 for this yaw drive D1 can then cause a fault matrix to be updated by incrementing the fault count for this yaw drive D1.

The diagram illustrates an optional addition to the monitoring arrangement 1, in the form of an encoder monitoring block 108 that performs pulse counting on the encoder data Eout to identify an erroneous encoder. In the event that the encoder of the yaw drive D1 is faulty, it will not generate position data even if the yaw drive D1 is otherwise functioning correctly. Because of the "zero speed" reported by a faulty encoder, the local mean 10M will effectively be zero, which will differ significantly from the collective mean 10Mcoll. However, by also considering the corresponding encoder status 10E (e.g. a flag that remains at "0" as long as the encoder is operating normally and which can be set to "1" to indicate that the encoder is no longer delivering useful data), the comparator 106 will not flag that yaw drive as potentially faulty. Instead, the information can be used to issue a fault report so that the wind turbine operator can schedule a maintenance procedure for this yaw drive D1. The encoder status 10E can be reported as an output signal ES1, ..., ES8 to a fault monitoring stage as will be explained below.

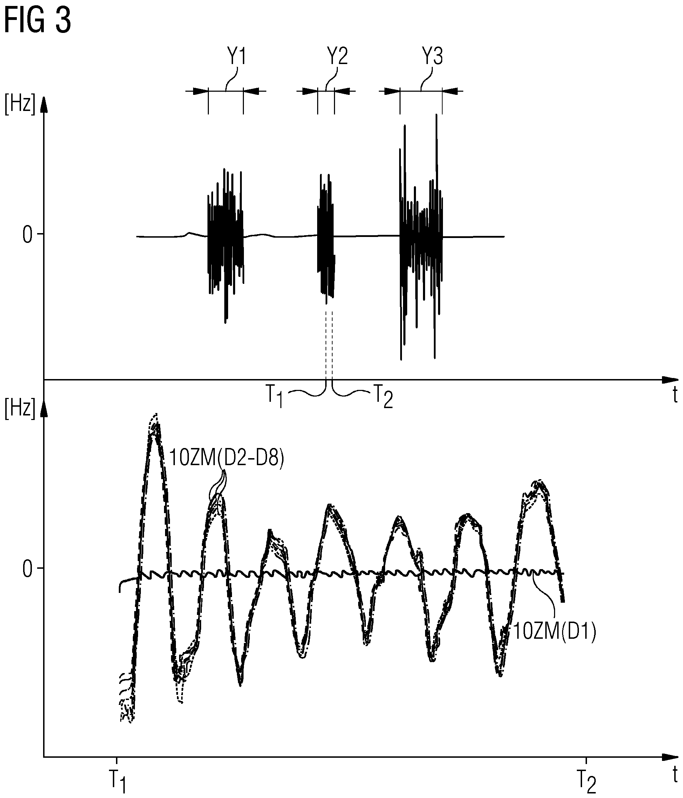

Figure 3 shows exemplary zero-mean normalized signals 10ZM for a series of yawing operations Y1, Y2, Y3 when carrying out the inventive method for a yaw system with eight yaw drives D1 - D8 as described in Figure 2 above. Each yawing action Y1, Y2, Y3 can have a duration of several minutes until the hub is correctly aligned into the wind, and the yaw error has reduced to an acceptable level.

In the lower part of the diagram, the chart is expanded between time T1 and time T2 to show in more detail a portion of a yawing action Y2. Each zero-mean normalized 10ZM is obtained as described in Figure 2 above. As the diagram shows, seven of the eight signals 10ZM are very similar, so that similar results can be expected when the mean 10M of any of these seven (corresponding to yaw drives D2 - D8 in Figure 2) is compared to the collective mean 10Mcoll. However, when the remaining signal mean 10M (corresponding to yaw drive D1 in Figure 2) is compared to the collective mean 10Mcoll, the comparison results will be significantly different. The significantly different comparison result can be interpreted as an indication that the corresponding yaw drive D1 has a faulty gearbox. As explained in Figure 2, the corresponding encoder status 10E can be evaluated to ensure that the fault does not lie in the encoder itself.

By computing and comparing the different types of signal mean as described above, it is possible to extract the signal dynamics from the encoder data. Therefore, even though the motor speed of a "faulty gearbox" yaw drive will appear similar to the motor speeds of the healthy yaw drives, the invention makes it possible to identify a "faulty gearbox" yaw drive with confidence. The information can be used to prevent overloading of the healthy yaw drives.

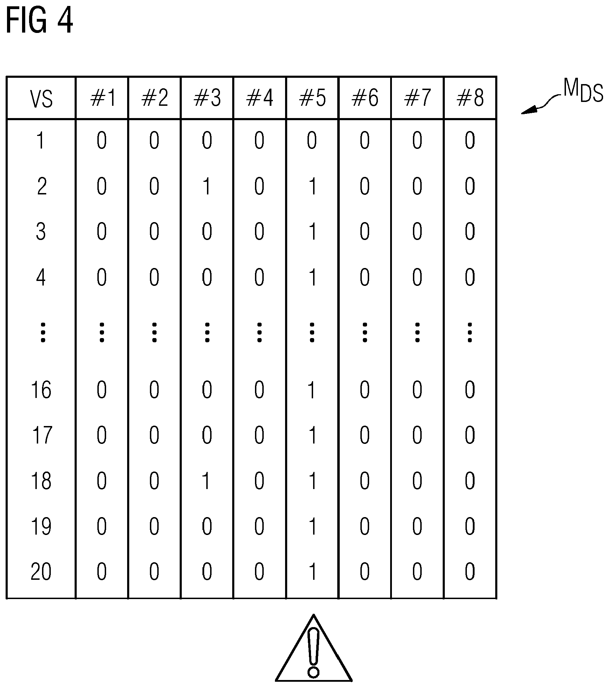

Figure 4 is a schematic representation of a yaw drive fault matrix M_{DS} (or "fault record") as generated when carrying out the inventive method. The fault matrix M_{DS} is arranged as a table, with the left-hand column for an incremental tally of the yawing actions, and one column for each of eight yaw drives. Each yaw drive status signal D1, ..., D8 is recorded in the table - for example "1" to indicate "faulty" and "0" to indicate "non-faulty". The fault record M_{DS} can store results for the most recent n yawing actions, for example 20 as shown here, overwriting the older entries as appropriate. Here, the column for yaw drive #5 indicates a persistent fault in its gearbox, and the wind turbine controller can issue a fault report when the fault count reaches a predefined limit. For example, if ten or more faults are recorded for yaw drive #5 over the last 20 yawing actions, the wind turbine controller can issue a fault report for yaw drive #5. This information can be used by the wind turbine operator when preparing for an annual inspection, or to schedule an additional repair procedure. A sporadic fault, as indicated in the column for yaw drive #3, is recorded but need not necessarily lead to a fault report.

A similar table (not shown here) can be used to record encoder health status ES1, ..., ES8, for example a table with a left-hand column representing yawing actions, and one column for each of the yaw drives. For each yawing action, the encoder status ES1, ..., ES8 of each yaw drive D1, ..., D8 is recorded. Whenever the monitoring arrangement 1 identifies a faulty encoder (e.g. the corresponding signal ES1, ..., ES8 is set to "1"), a corresponding entry is recorded in the table. Like the yaw drive fault matrix described above, this encoder status table can store results for the most recent n yawing actions, overwriting the older entries as appropriate. Here also, a tally of the faulty status flags can lead to a fault report, for example if the encoder status ES1, ..., ES8 of a yaw drive has been set to "1" a certain number of times over the last 20 yawing actions, and the information can be used by the wind turbine operator when preparing for an annual inspection, or to schedule an additional repair procedure.

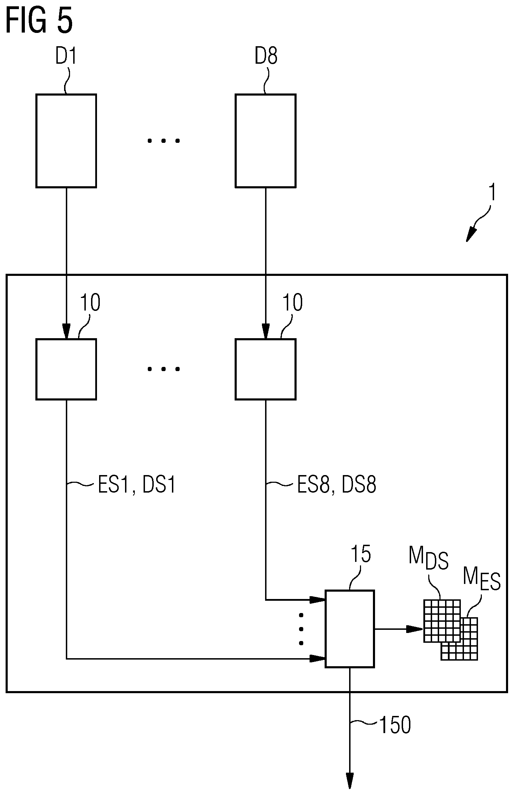

Figure 5 is a schematic representation of the inventive monitoring arrangement 1. The diagram shows how the encoder data from each of a plurality of yaw drives D1 - D8 is collected and processed in computation modules 10 as described above to generate a gearbox status value DS1 - DS8 for each yaw drive D1 - D8, for example after a completed yawing action. The gearbox status values DS1 - DS8 are evaluated in a fault evaluation module 15, which updates a fault matrix M_{DS} as appropriate, and which issues a fault report 150 whenever necessary. Similarly, the encoder status values ES1 - ES8 are evaluated in the fault evaluation module 15, which updates a status matrix M_{ES} as appropriate, and which issues a fault report 150 whenever necessary. For example, a fault report 150 can be issued if the fault count of a yaw drive D1 - D8 has reached or exceeded a limit during a predefined number of yawing actions; a fault report 150 can be issued if the encoder E of a yaw drive D1 - D8 is deemed faulty.

Although the present invention has been disclosed in the form of preferred embodiments and variations thereon, it will be understood that numerous additional modifications and variations could be made thereto without departing from the scope of the invention. For example, although the invention has been described using the example of a yaw system with eight yaw drives, it shall be understood that a yaw system can comprise any number of yaw drives.

For the sake of clarity, it is to be understood that the use of "a" or "an" throughout this application does not exclude a plurality, and "comprising" does not exclude other steps or elements.

## Claims

1. A method of monitoring a wind turbine yaw system (2) comprising a plurality of yaw drives (D1, ..., D8), which method comprises, for each yaw drive (D1):
- receiving encoder data (Eout) from a motor speed encoder (E) of that yaw drive (D1);
- computing a signal mean (10M) on the basis of the received encoder data (Eout);
- computing a collective signal mean (10Mcoll) from the signal means (10M) of the other yaw drives (D2, ..., D8);
- comparing the signal mean (10M) to the collective signal mean (10Mcoll); and
- flagging that yaw drive (D1) as potentially faulty if the corresponding comparison result (10Δ) exceeds a predefined threshold (10T).

2. A method according to the preceding claim, comprising steps of processing encoder data (Eout) to obtain a pulse frequency signal (10PF), and performing zero-mean normalization on the pulse frequency signal (10PF).

3. A method according to the preceding claim, wherein the step of computing the signal mean (10M) comprises computing the root-mean-square of the zero-mean normalized signal (10ZM).

4. A method according to any of the preceding claims, wherein encoder signals (Eout) are collected over a portion of a yawing action (Y1, Y2, Y3).

5. A method according to any of the preceding claims, comprising a subsequent step of recording the fault status (DS1, ..., DS8) of each yaw drive (D1, ..., D8) in a fault record (M_{DS}).

6. A method according to any of the preceding claims, comprising a step of maintaining a fault count for each yaw drive (D1, ..., D8).

7. A method according to any of the preceding claims, comprising a step of issuing a fault report (150) when the fault count of a yaw drive (D1, ..., D8) exceeds a predetermined limit.

8. A method according to any of the preceding claims, comprising a step of determining the operational status (10E; ES1, ..., ES8) of each encoder (E).

9. A method according to the preceding claim, wherein a potentially faulty yaw drive (D1, ..., D8) is flagged as faulty if its encoder (E) is deemed operational.

10. A method according to any of the preceding claims, wherein a potentially faulty yaw drive (D1, ..., D8) is excluded from subsequent fault assessment.

11. A monitoring arrangement (1) for a wind turbine yaw system (20) comprising a plurality of yaw drives (D1, ..., D8), which monitoring arrangement (1) comprises a computation module (10) for each yaw drive (D1, ..., D8), and wherein each computation module (10) comprises:
- an input stage (101) for receiving encoder data (Eout) from a motor speed encoder (E) of the corresponding yaw drive (D1);
- a processing stage (102, 103) configured to compute a signal mean (10M) on the basis of the received encoder data (Eout);
- a processing stage (105) configured to compute a collective signal mean (10Mcoll) from the signal mean s (10M) of the other yaw drives (D2, ..., D8);
- a comparator stage (104) configured to compare the signal mean (10M) to the collective signal mean (10Mcoll); and
- an output stage (106) configured to flag that yaw drive (D1) as potentially faulty if the corresponding comparison result (10Δ) exceeds a predefined threshold (10T) .

12. A monitoring arrangement according to the preceding claim, wherein each computation module (10) is configured to determine the operational status (10E; ES1, ..., ES8) of the corresponding motor speed encoder (E).

13. A wind turbine (2) comprising
- a yaw system (20) comprising a gear rim (22) and a plurality of yaw drives (21), wherein each yaw drive (21) comprises an electric motor (210), a motor speed encoder (E), a gearbox (211), and a pinion (212) arranged to engage with the gear rim (22); and
- a monitoring arrangement (1) according to any of claims 11 to 12.

14. A wind turbine according to the preceding claim, wherein the monitoring arrangement (1) is realised as a module of the wind turbine controller (29).

15. A computer program product comprising a computer program that is directly loadable into a memory of wind turbine controller (29) and which comprises program elements for performing steps of the method according to any of claims 1 to 10 when the computer program is executed by the wind turbine controller (29).
